# EUROPEAN PATENT APPLICATION

(11) **EP 4 321 349 A1**
(43) Date of publication of application: **14.02.2024**
(21) Application number: 22784492.5
(22) Date of filing: 22.03.2022
(51) Int. Cl.: B60C 1/00, B62D 55/02, C08K 5/09, C08K 5/25, C08K 5/3415, C08K 5/41, C08K 5/50, C08K 5/51, C08K 5/55, C08L 21/00, C08K 3/013, C08K 3/04, C08K 3/36, F16L 11/04, F16L 11/08

(54) **RUBBER COMPOSITION, RUBBER-METAL COMPOSITE, TIRE, HOSE, AND CRAWLER**

(30) Priority: 05.04.2021 JP 2021064152; 24.11.2021 JP 2021190240
(71) Applicant: BRIDGESTONE CORPORATION, Chuo-ku Tokyo 104-8340 (JP)
(72) Inventor: KANEDA, Kazunori, Tokyo 104-8340 (JP); YAMAGISHI, Junichi, Tokyo 104-8340 (JP); SAITO, Kosuke, Tokyo 104-8340 (JP)
(74) Representative: Marks & Clerk LLP
(86) International application number: PCT/JP2022/013068
(87) International publication number: WO 2022/215507

(57) **Abstract**

A rubber composition comprises: a rubber component; 0.01 parts by mass or more of a rubber-metal adhesion promoter per 100 parts by mass of the rubber component, the rubber-metal adhesion promoter containing at least one selected from the group consisting of a carboxylic acid metal salt (1) having a carbon number of 2 to 25 and a metal species selected from the group consisting of bismuth, copper, antimony, silver, niobium, and zirconium and a compound (2) represented by formula (A); and 4,4'-diphenylmethanebismaleimide. The use of the rubber composition enables obtainment of vulcanized rubber having good deterioration resistance, excellent durability, and excellent rubber-metal thermal deterioration adhesiveness.

## Description

### TECHNICAL FIELD

The present disclosure relates to a rubber composition, a rubber-metal composite, a tire, a hose, and a crawler.

### BACKGROUND

Due to environmental regulations in recent years, investigation of substances to replace cobalt salts (cobalt stearate, cobalt versatate, etc.), which are widely used as rubber-metal adhesion promoters, is urgently required.

For example, a rubber-metal adhesion promoter containing: a carboxylic acid metal salt (1) that is a metal salt of an aliphatic carboxylic acid having a carbon number of 2 to 25 and in which the metal is bismuth, copper, antimony, silver, or niobium; or a compound (2) represented by the following general formula (A) [where Z is a structure selected from the following formulas (z-1) to (z-4), M is bismuth, copper, antimony, silver, or niobium, (RCOO) is a residue of an aliphatic carboxylic acid having a carbon number of 2 to 25, and x is (valence of M - 1)] is disclosed (see, for example, PTL 1).

A metal organic compound of average formula: X(OMA'p)m(OMB'p)n [where M is cobalt, nickel, or bismuth, B' is a residue of an aromatic carboxylic acid having a carbon number of 7 to 11, A' is a residue of an aliphatic carboxylic acid having a carbon number of 7 to 11, p is 1 when M is cobalt or nickel and 2 when M is bismuth, n is 0.5 to 2, and m is (3 - n)] is disclosed (see, for example, PTL 2).

A method that causes gelling or increase of viscosity of an aqueous medium containing a gellable polymeric material having substituents with phenolic hydroxy groups and comprises adding an effective amount of a laccase to the aqueous medium is disclosed (see, for example, PTL 3).

A steel cord-rubber composite in which a steel cord having one or more steel filaments with a plating layer containing copper, zinc, and cobalt formed thereon and rubber are adhered to each other is disclosed, wherein the rubber and the plating layer are adhered, a layer in which a compound of copper and sulfur exists in the plating layer is an adhesion layer, a position of an inflection point at which a sulfur content of the adhesion layer increases when the sulfur content is analyzed from the plating layer toward the rubber in a direction perpendicular to a longitudinal direction of the steel filaments is an adhesion layer bottom, a part whose atomic % of cobalt is higher than atomic % of cobalt of the entire plating layer when atomic % of cobalt is analyzed for 100 nm inward in the direction perpendicular to the longitudinal direction of the steel filaments from the adhesion layer bottom at six points with equal intervals in the longitudinal direction of the steel filaments is a cobalt-rich region (nm), and a total (nm) of cobalt-rich regions at the six points is not less than 40 % of a total (nm) of analysis ranges at the six points (see, for example, PTL 4).

### CITATION LIST

### Patent Literature

PTL 1: WO 2016/039375 A1
PTL 2: JP H4-230397 A
PTL 3: JP H10-502962 A
PTL 4: WO 2016/203886 A1

### SUMMARY

### (Technical Problem)

When only a bismuth salt or the like is blended in a rubber composition as described in PTL 1 to PTL 4, rubber-metal thermal deterioration adhesiveness is obtained but the deterioration resistance of vulcanized rubber decreases and the hysteresis loss increases. Thus, there are many difficulties in achieving both the rubber-metal thermal deterioration adhesiveness and the durability of vulcanized rubber.

It could therefore be helpful to provide a rubber composition that enables obtainment of vulcanized rubber having good deterioration resistance, excellent durability, and excellent rubber-metal thermal deterioration adhesiveness, a rubber-metal composite having excellent durability and rubber-metal adhesiveness, and a tire, a hose, and a crawler having excellent durability.

### (Solution to Problem)

<1> A rubber composition comprising: a rubber component; 0.01 parts by mass or more of a rubber-metal adhesion promoter per 100 parts by mass of the rubber component, the rubber-metal adhesion promoter containing at least one selected from the group consisting of a carboxylic acid metal salt (1) having a carbon number of 2 to 25 and a metal species selected from the group consisting of bismuth, copper, antimony, silver, niobium, and zirconium and a compound (2) represented by the following formula (A); and 4,4'-diphenylmethanebismaleimide. 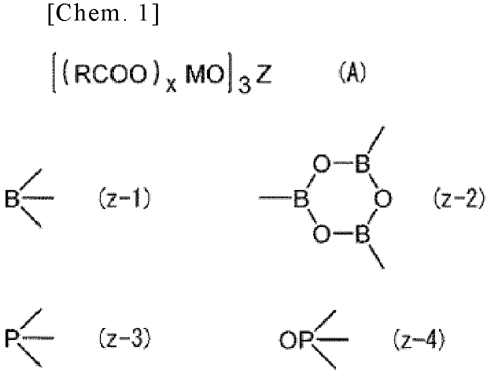 In the formula (A), Z is a structure selected from the formulas (z-1) to (z-4), M is bismuth, copper, antimony, silver, niobium, or zirconium, (RCOO) is a residue of an aliphatic carboxylic acid having a carbon number of 2 to 25, and x is an integer of (valence of M - 1).
<2> The rubber composition according to <1>, further comprising at least one selected from the group consisting of hexamethylenebisthiosulfate disodium dihydrate, 1,3-bis(citraconimidomethyl)benzene, and 3-hydroxy-N'-(1,3-dimethylbutylidene)-2-naphthoic acid hydrazide.
<3> The rubber composition according to <1> or <2>, comprising a filler containing at least one selected from the group consisting of carbon black and silica.
<4> The rubber composition according to any one of <1> to <3>, wherein the rubber component contains natural rubber.
<5> The rubber composition according to any one of <1> to <4>, wherein the rubber-metal adhesion promoter contains the carboxylic acid metal salt (1), and the metal species of the carboxylic acid metal salt (1) is bismuth or copper.
<6> The rubber composition according to any one of <1> to <5>, wherein the rubber-metal adhesion promoter contains the carboxylic acid metal salt (1), and an aliphatic carboxylic acid in the carboxylic acid metal salt (1) is an aliphatic monocarboxylic acid or an aliphatic dicarboxylic acid.
<7> The rubber composition according to <6>, wherein the aliphatic monocarboxylic acid is a saturated aliphatic monocarboxylic acid having a carbon number of 2 to 20.
<8> The rubber composition according to <7>, wherein the saturated aliphatic monocarboxylic acid having a carbon number of 2 to 20 is 2-ethylhexanoic acid, neodecanoic acid, hexadecanoic acid, or octadecanoic acid.
<9> The rubber composition according to any one of <1> to <8>, wherein the rubber-metal adhesion promoter contains the compound (2), and M in the compound (2) is bismuth or copper.
<10> The rubber composition according to any one of <1> to <9>, wherein the rubber-metal adhesion promoter contains the compound (2), and Z in the compound (2) is a structure represented by the formula (z-1).
<11> The rubber composition according to any one of <1> to <10>, wherein the rubber-metal adhesion promoter contains the compound (2), and (RCOO) in the compound (2) is a residue of a saturated aliphatic monocarboxylic acid having a carbon number of 2 to 20.
<12> The rubber composition according to <11>, wherein (RCOO) in the compound (2) is a residue of 2-ethylhexanoic acid, a residue of neodecanoic acid, a residue of hexadecanoic acid, or a residue of octadecanoic acid.
<13> A rubber-metal composite comprising: a vulcanized rubber of the rubber composition according to any one of <1> to <12>; and a metal.
<14> A tire comprising the rubber-metal composite according to <13>.
<15> A hose comprising the rubber-metal composite according to <13>.
<16> A crawler comprising the rubber-metal composite according to <13>.

### (Advantageous Effect)

It is thus possible to provide a rubber composition that enables obtainment of vulcanized rubber having good deterioration resistance, excellent durability, and excellent rubber-metal thermal deterioration adhesiveness, a rubber-metal composite having excellent durability and rubber-metal adhesiveness, and a tire, a hose, and a crawler having excellent durability.

### DETAILED DESCRIPTION

An embodiment of the present disclosure will be described in detail below. In the following description, the expression in the form of "A to B" for indicating a numerical range represents a numerical range including the end points A and B, and denotes "A or more and B or less" (when A < B) or "A or less and B or more" (when A > B).

Parts by mass and mass% are synonymous with parts by weight and wt%, respectively.

### <Rubber composition>

A rubber composition according to the present disclosure comprises: a rubber component; 0.01 parts by mass or more of a rubber-metal adhesion promoter per 100 parts by mass of the rubber component, the rubber-metal adhesion promoter containing at least one selected from the group consisting of a carboxylic acid metal salt (1) having a carbon number of 2 to 25 and a metal species selected from the group consisting of bismuth, copper, antimony, silver, niobium, and zirconium and a compound (2) represented by the following formula (A); and 4,4'-diphenylmethanebismaleimide.

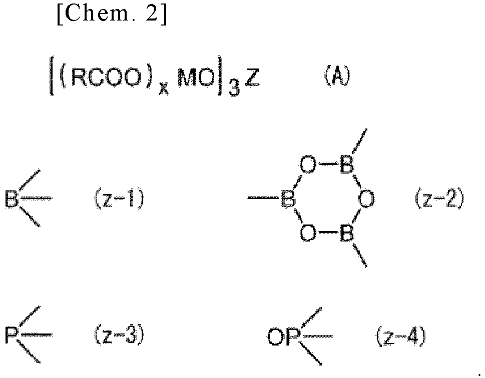

In the formula (A), Z is a structure selected from the formulas (z-1) to (z-4), M is bismuth, copper, antimony, silver, niobium, or zirconium, (RCOO) is a residue of an aliphatic carboxylic acid having a carbon number of 2 to 25, and x is an integer of (valence of M - 1).

When a compound containing a metal such as bismuth is used as a substitute for a cobalt-containing compound of an adhesive for rubber-metal adhesion, rubber-metal adhesiveness is obtained but the durability of vulcanized rubber decreases. As a result of the rubber composition according to the present disclosure having the foregoing structure, the vulcanized rubber has good deterioration resistance and excellent durability, with it being possible to obtain a rubber-metal composite having excellent rubber-metal thermal deterioration adhesiveness and a tire having excellent durability. Although the reason for this is not clear, it is presumed that the use of the foregoing rubber-metal adhesion promoter containing bismuth or the like and 4,4'-diphenylmethanebismaleimide complements the deterioration resistance of the vulcanized rubber and consequently the vulcanized rubber has excellent rubber-metal thermal deterioration adhesiveness and the rubber-metal composite has excellent durability.

In particular, with the rubber composition according to the present disclosure, even in the case where an unvulcanized rubber-metal composite (referred to as "rubber-metal composite precursor") is produced and, after a certain period of time, vulcanized to obtain a rubber-metal composite, the rubber-metal composite has excellent rubber-metal adhesiveness and high durability without metal corrosion.

The rubber composition, rubber-metal composite, and tire according to the present disclosure will be described in detail below.

### [Rubber component]

The rubber composition according to the present disclosure contains a rubber component.

The rubber component includes at least one diene-based rubber selected from the group consisting of natural rubber (NR) and synthetic diene-based rubber. The rubber component may be modified.

Specific examples of the synthetic diene-based rubber include polyisoprene rubber (IR), polybutadiene rubber (BR), styrene-butadiene copolymer rubber (SBR), butadiene-isoprene copolymer rubber (BIR), styreneisoprene copolymer rubber (SIR), styrene-butadiene-isoprene copolymer rubber (SBIR), and modified rubbers thereof.

As the diene-based rubber, natural rubber, polyisoprene rubber, styrene-butadiene copolymer rubber, polybutadiene rubber, isobutylene isoprene rubber, and modified rubbers thereof are preferable, natural rubber, polyisoprene rubber, and polybutadiene rubber are more preferable, and natural rubber and polyisoprene rubber are further preferable, from the viewpoint of the adhesiveness between metal and vulcanized rubber.

These diene-based rubbers may be used alone or in a blend of two or more.

The rubber component preferably contains natural rubber in an amount of 55 mass% or more, more preferably in an amount of 65 mass% or more, and further preferably in an amount of 75 mass% or more, from the viewpoint of increasing the adhesiveness between metal and vulcanized rubber and improving the durability of the resultant rubber-metal composite. The upper limit of the proportion of natural rubber in the rubber component may be 100 mass%.

The rubber component preferably contains natural rubber (NR) and polyisoprene rubber (IR) in combination, from the viewpoint of increasing the adhesiveness between metal and vulcanized rubber and improving the durability of the resultant rubber-metal composite. The ratio between the two (mass of natural rubber : mass of polyisoprene rubber) is preferably 55:45 to 95:5, more preferably 65:35 to 93:17, and further preferably 70:30 to 90:10.

The rubber component may contain non-diene-based rubber as long as the effects according to the present disclosure are not impaired.

### [Rubber-metal adhesion promoter]

The rubber composition according to the present disclosure contains a rubber-metal adhesion promoter containing at least one selected from the group consisting of a carboxylic acid metal salt (1) having a carbon number of 2 to 25 and a metal species selected from the group consisting of bismuth, copper, antimony, silver, niobium, and zirconium and a compound (2) represented by the following formula (A).

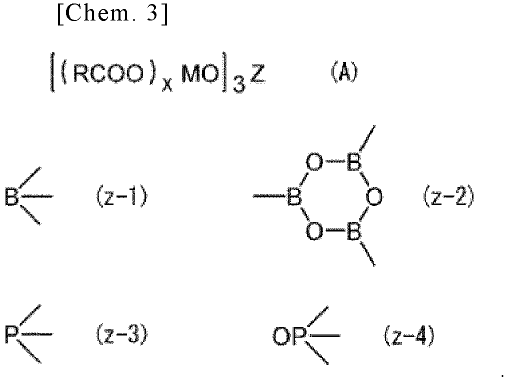

In the formula (A), Z is a structure selected from the formulas (z-1) to (z-4), M is bismuth, copper, antimony, silver, niobium, or zirconium, (RCOO) is a residue of an aliphatic carboxylic acid having a carbon number of 2 to 25, and x is an integer of (valence of M - 1).

The carboxylic acid metal salt (1) is a metal salt of an aliphatic carboxylic acid having a carbon number of 2 to 25. The metal species is bismuth, copper, antimony, silver, niobium, or zirconium. Of these metal species, bismuth, copper, antimony, or silver is preferable and bismuth or copper is more preferable because they serve as an adhesion promoter that provides good adhesion between steel cords and rubber even under wet heat conditions.

If the carbon number of the carboxylic acid metal salt (1) is less than 2, the compatibility between the carboxylic acid metal salt (1) and the rubber component is low, and high adhesiveness between vulcanized rubber and metal cannot be obtained. A carboxylic acid metal salt (1) having a carbon number of more than 25 is difficult to synthesize.

Examples of the aliphatic carboxylic acid having a carbon number of 2 to 25 include aliphatic monocarboxylic acids and aliphatic dicarboxylic acids. Herein, the carbon number of the aliphatic carboxylic acid means a number including the carbon number of the carboxy group.

Examples of the aliphatic carboxylic acid having a carbon number of 2 to 25 include saturated aliphatic monocarboxylic acids and unsaturated aliphatic monocarboxylic acids.

Examples of the saturated aliphatic monocarboxylic acids include ethanoic acid, propanoic acid, butanoic acid, pentanoic acid, hexanoic acid, 2-ethylhexanoic acid, heptanoic acid, octanoic acid, nonanoic acid, isononanoic acid, decanoic acid, neodecanoic acid, dodecanoic acid, tetradecanoic acid, hexadecanoic acid, heptadecanoic acid, octadecanoic acid, eicosanoic acid, docosanoic acid, tetracosanoic acid, and naphthenic acid.

Examples of the unsaturated aliphatic monocarboxylic acids include 9-hexadecenoic acid, cis-9-octadecenoic acid, 11-octadecenoic acid, cis,cis-9,12-octadecadienoic acid, 9,12,15-octadecatrienoic acid, 6,9,12-octadecatrienoic acid, 9,11,13-octadecatrienoic acid, eicosanoic acid, 8,11-eicosadienoic acid, 5,8,11-eicosatrienoic acid, 5,8,11,14-eicosatetraenoic acid, tung oil acid, linseed oil acid, soybean oil acid, resin acid, tall oil fatty acid, rosin acid, abietic acid, neoabietic acid, palustric acid, pimaric acid, and dehydroabietic acid.

Examples of aliphatic dicarboxylic acids having a carbon number of 2 to 25 include saturated aliphatic dicarboxylic acids and unsaturated aliphatic dicarboxylic acids.

Examples of the saturated aliphatic dicarboxylic acids include oxalic acid, malonic acid, succinic acid, glutaric acid, and adipic acid.

Examples of the unsaturated aliphatic dicarboxylic acids include fumaric acid and maleic acid.

The aliphatic carboxylic acid having a carbon number of 2 to 25 is preferably an aliphatic monocarboxylic acid or an aliphatic dicarboxylic acid, more preferably an aliphatic monocarboxylic acid, and further preferably a saturated aliphatic monocarboxylic acid. The use of a saturated aliphatic monocarboxylic acid is less likely to affect sulfur crosslinking of rubber and can suppress a decrease in the rubber properties of vulcanized rubber.

Of saturated fatty acids, saturated aliphatic monocarboxylic acids having a carbon number of 2 to 20 are preferable, and 2-ethylhexanoic acid, neodecanoic acid, hexadecanoic acid, or octadecanoic acid is more preferable.

For example, the carboxylic acid metal salt (1) can be obtained by any of the following methods.

Production method 1: A production method in which an aliphatic carboxylic acid having a carbon number of 2 to 25 (a) and one or more selected from an oxide of metal (bismuth, copper, antimony, silver, niobium, or zirconium) (b-1), a hydroxide of metal (bismuth, copper, antimony, silver, niobium, or zirconium) (b-2), and a carbonate of metal (bismuth, copper, antimony, silver, niobium, or zirconium) (b-3) are directly reacted (direct method).

Production method 2: A production method in which an aliphatic carboxylic acid having a carbon number of 2 to 25 (a) and sodium hydroxide are reacted in the presence of water to obtain a sodium salt of the aliphatic carboxylic acid, and then the sodium salt of the aliphatic carboxylic acid and one or more selected from a sulfate of metal (bismuth, copper, antimony, silver, niobium, or zirconium) (c-1), a chloride of metal (bismuth, copper, antimony, silver, niobium, or zirconium) (c-2), and a nitrate of metal (bismuth, copper, antimony, silver, niobium, or zirconium) (c-3) are reacted (double decomposition method).

Examples of the oxide of metal (bismuth, copper, antimony, silver, niobium, or zirconium) (b-1) include bismuth(III) oxide, copper(I) oxide, copper(II) oxide, antimony(III) oxide, antimony(V) oxide, silver(I) oxide, silver(II) oxide, silver(III) oxide, niobium(IV) oxide, niobium(V) oxide, and zirconium oxide.

Examples of the hydroxide of metal (bismuth, copper, antimony, silver, niobium, or zirconium) (b-2) include copper(II) hydroxide and zirconium hydroxide.

Examples of the carbonate of metal (bismuth, copper, antimony, silver, niobium, or zirconium) (b-3) include bismuth(III) carbonate, bismuth(III) carbonate oxide, and copper(II) carbonate.

Examples of the sulfate of metal (bismuth, copper, antimony, silver, niobium, or zirconium) (c-1) include copper(II) sulfate and zirconium sulfate.

Examples of the chloride of metal (bismuth, copper, antimony, silver, niobium, or zirconium) (c-2) include bismuth(III) chloride oxide, copper(I) chloride, copper(II) chloride, antimony(III) chloride, antimony(V) chloride, silver(I) chloride, and niobium(V) chloride.

Examples of the nitrate of metal (bismuth, copper, antimony, silver, niobium, or zirconium) (c-3) include bismuth(III) nitrate, bismuth(III) subnitrate, and silver(I) nitrate.

In the production method 1, the reaction temperature when reacting the aliphatic carboxylic acid having a carbon number of 2 to 25 (a) and any of the compounds (b-1) to (b-3) is typically 50 °C to 150 °C. The reaction time is typically 1 hour to 20 hours.

In the production method 2, the reaction temperature when reacting the aliphatic carboxylic acid having a carbon number of 2 to 25 (a) and sodium hydroxide in the presence of an organic solvent is typically 20 °C to 100 °C. The reaction time is typically 1 hour to 5 hours.

In the production method 2, the reaction temperature when reacting the sodium salt of the aliphatic carboxylic acid and any of the compounds (c-1) to (c-3) is typically 20 °C to 100 °C. The reaction time is typically 1 hour to 5 hours.

In the production method 2, after the sodium salt of the aliphatic carboxylic acid and any of the compounds (c-1) to (c-3) are reacted, an aqueous layer in the reaction system is separated. The solvent present in the oil layer is then removed by distillation under reduced pressure to thus obtain the carboxylic acid metal salt (1).

Next, the compound (2) represented by the formula (A) will be described in detail below.

(RCOO) in the compound (2) is a residue of an aliphatic carboxylic acid having a carbon number of 2 to 25. If the carbon number of the residue of the aliphatic carboxylic acid is less than 2, the compatibility between the rubber component and the compound (2) is low, as a result of which the adhesiveness between vulcanized rubber and metal decreases. If the carbon number of the residue of the aliphatic carboxylic acid is more than 25, it is difficult to synthesize the compound (2). In addition, the compound (2) is hard to disperse in the rubber component or the vulcanized rubber is hard to adsorb to the steel cord surface, as a result of which the adhesiveness between vulcanized rubber and metal decreases.

Examples of the residue of the aliphatic carboxylic acid having a carbon number of 2 to 25 include residues of aliphatic monocarboxylic acids. For example, residues derived from the aliphatic monocarboxylic acids mentioned above in the description of the carboxylic acid metal salt (1) are preferred.

Of the residues of aliphatic carboxylic acids, residues of saturated aliphatic monocarboxylic acids are preferable. The use of a residue of a saturated aliphatic monocarboxylic acid facilitates the dispersion of the compound (2) in the vicinity of the steel cords or the adsorption of the vulcanized rubber to the steel cord surface. Of the residues of the saturated aliphatic monocarboxylic acids, residues of saturated aliphatic monocarboxylic acids having a carbon number of 2 to 20 are preferable, and a residue of 2-ethylhexanoic acid, a residue of neodecanoic acid, a residue of hexadecanoic acid, or a residue of octadecanoic acid is more preferable.

M in the compound represented by the formula (A) is a metal species, specifically, bismuth, copper, antimony, silver, niobium, or zirconium. Of these metal species, bismuth, copper, antimony, or silver is preferable and bismuth or copper is more preferable because they serve as an adhesion promoter that provides good adhesion between steel cords and rubber even under wet heat conditions.

x in the compound (2) represented by the formula (A) is an integer of (valence of M - 1).

Z in the compound (2) represented by the formula (A) is a structure selected from the foregoing formulas (z-1) to (z-4).

Of these, a structure represented by the formula (z-1) is preferable because an adhesion promoter that achieves high adhesiveness between vulcanized rubber and metal is easily obtained.

The compound (2) represented by the formula (A) can be produced, for example, by mixing and heating an aliphatic carboxylic acid having a carbon number of 2 to 25 (a), an inorganic acid ester (d), an acid (e), and a metal compound M (f) and removing the resultant volatile ester (g).

Examples of the aliphatic carboxylic acid having a carbon number of 2 to 25 (a) include the foregoing aliphatic monocarboxylic acids having a carbon number of 2 to 25.

Examples of the inorganic acid ester (d) include a borate ester of lower alcohol having a carbon number of 1 to 5 (d-1), a metaborate ester of lower alcohol having a carbon number of 1 to 5 (d-2), a phosphate ester of lower alcohol having a carbon number of 1 to 5 (d-3), and a phosphite ester of lower alcohol having a carbon number of 1 to 5 (d-4).

Examples of the borate ester of lower alcohol (d-1) include trimethyl borate, triethyl borate, tripropyl borate, and tributyl borate.

Examples of the metaborate ester of lower alcohol (d-2) include trimethyl metaborate, triethyl metaborate, tripropyl metaborate, and tributyl metaborate.

Examples of the phosphate ester of lower alcohol (d-3) include methyl phosphate, ethyl phosphate, propyl phosphate, and butyl phosphate.

Examples of the phosphite ester of lower alcohol (d-4) include methyl phosphite, ethyl phosphite, propyl phosphite, and butyl phosphite.

Of these, the metaborate ester of lower alcohol (d-2) is preferable from the viewpoint of suppressing metal corrosion after treat-leaving.

The acid (e) is an acid capable of forming the volatile ester (g) with a lower alcohol residue having a carbon number of 1 to 5 present in the inorganic acid ester (d). Specific examples of the acid (e) include ethanoic acid, propanoic acid, and butanoic acid.

The metal compound M (f) is a metal source of the compound (2). For example, the foregoing oxide (b-1), hydroxide (b-2), carbonate (b-3), etc. mentioned above in the description of the production method for the carboxylic acid metal salt (1) may be used.

The proportion of the metal compound M (f) used as the metal source is, for example, 20 parts to 100 parts by mass per 100 parts by mass of the aliphatic carboxylic acid having a carbon number of 2 to 25 (a).

The proportion of the inorganic acid ester (d) used is, for example, 10 parts to 50 parts by mass per 100 parts by mass of the aliphatic carboxylic acid having a carbon number of 2 to 25 (a).

The proportion of the acid (e) used is, for example, 10 parts to 50 parts by mass per 100 parts by mass of the aliphatic carboxylic acid having a carbon number of 2 to 25 (a).

The mixing of the aliphatic carboxylic acid having a carbon number of 2 to 25 (a), the inorganic acid ester (d), the acid (e), and the metal compound M (f) may be performed in one step or divided into a plurality of steps.

An example of a method of mixing the components in a plurality of steps is a production method including the following first and second steps.

In the first step, the aliphatic carboxylic acid having a carbon number of 2 to 25 (a), the acid (e), and the metal compound M (f) are mixed and heated to obtain a reaction product (h).

In the second step, water is removed from the reaction system containing the reaction product (h) obtained in the first step, and then the inorganic acid ester (d) is added to the reaction system from which water has been removed to react the reaction product (h) and the inorganic acid ester (d).

By producing the compound (2) through these two steps, it is possible to prevent the inorganic acid ester (d) from being hydrolyzed by water generated in the first step. The compound (2) can thus be produced efficiently.

In the production method including these two steps, the temperature at which the aliphatic carboxylic acid having a carbon number of 2 to 25 (a), the inorganic acid ester (d), the acid (e), and the metal compound M (f) are reacted is, for example, 100 °C to 250 °C, and preferably 150 °C to 220 °C. The reaction time is, for example, 1 hour to 20 hours, and preferably 1 hour to 5 hours.

The content of the rubber-metal adhesion promoter in the rubber composition needs to be 0.01 parts by mass or more per 100 parts by mass of the rubber component, from the viewpoint of improving the adhesiveness between vulcanized rubber and metal and improving the durability of the metal-rubber composite and tire. If the content is less than 0.01 parts by mass, sufficient adhesiveness between vulcanized rubber and metal cannot be achieved.

The content of the rubber-metal adhesion promoter is preferably less than 1.0 part by mass per 100 parts by mass of the rubber component. Hence, the content of the rubber-metal adhesion promoter in the rubber composition is more preferably 0.01 parts to 0.9 parts by mass, further preferably 0.02 parts to 0.8 parts by mass, and particularly preferably 0.02 parts to 0.7 parts by mass.

### [4,4'-diphenylmethanebismaleimide]

The rubber composition according to the present disclosure contains 4,4'-diphenylmethanebismaleimide.

If the rubber composition does not contain 4,4'-diphenylmethanebismaleimide, vulcanized rubber having excellent adhesiveness to metal cannot be obtained, and the resultant rubber-metal composite and tire are poor in durability. If the rubber composition does not contain 4,4'-diphenylmethanebismaleimide, metal corrosion progresses after treat-leaving, causing a decrease in rubber-metal adhesiveness.

The content of 4,4'-diphenylmethanebismaleimide in the rubber composition is preferably 0.3 parts to 2.0 parts by mass, more preferably 0.3 parts to 1.5 parts by mass, and further preferably 0.5 parts to 1.2 parts by mass per 100 parts by mass of the rubber component.

4,4'-diphenylmethanebismaleimide is available for purchase from Otsuka Chemical Co., Ltd., Tokyo Chemical Industry Co., Ltd., or Daiwa Kasei Industry Co., Ltd. Daiwa Kasei Industry Co., Ltd. sells 4,4'-diphenylmethanebismaleimide under the trade name "BMI-1000".

The proportion of 4,4'-diphenylmethanebismaleimide to the rubber-metal adhesion promoter is not limited, but the mass ratio of 4,4'-diphenylmethanebismaleimide to the rubber-metal adhesion promoter (4, 4'-diphenylmethanebismaleimide/rubber-metal adhesion promoter) is preferably 0.3 to 150, more preferably 0.5 to 100, further preferably 0.7 to 50, and particularly preferably 0.9 to 20. As a result of the mass ratio being in such a range, the durability is likely to be further improved.

The rubber composition according to the present disclosure preferably contains at least one (referred to as "component B") selected from the group consisting of hexamethylenebisthiosulfate disodium dihydrate, 1,3-bis(citraconimidomethyl)benzene, and 3-hydroxy-N'-(1,3-dimethylbutylidene)-2-naphthoic acid hydrazide.

As a result of the rubber composition containing one, two, or all of hexamethylenebisthiosulfate disodium dihydrate, 1,3-bis(citraconimidomethyl)benzene, and 3-hydroxy-N'-(1,3-dimethylbutylidene)-2-naphthoic acid hydrazide, the rubber-metal adhesiveness is further improved and the durability of the rubber-metal composite and tire is further improved.

The component B preferably contains at least hexamethylenebisthiosulfate disodium dihydrate.

The content of the component B in the rubber composition is preferably 0.3 parts to 5.0 parts by mass, more preferably 0.5 parts to 3.0 parts by mass, and further preferably 1.0 part to 2.0 parts by mass per 100 parts by mass of the rubber component.

### [Cobalt-containing material]

The rubber composition according to the present disclosure may or may not contain a cobalt-containing material.

Examples of organic acid cobalt salts include cobalt naphthenate, cobalt stearate, cobalt neodecanoate, cobalt rosinate, cobalt versatate, cobalt tallate, cobalt oleate, cobalt linoleate, cobalt linolenate, and cobalt palmitate. Examples of cobalt metal complexes include cobalt acetylacetonate.

Cobalt-containing materials have conventionally been used to promote rubber-metal adhesiveness, as mentioned above. The rubber composition according to the present disclosure contains a rubber-metal adhesion promoter containing bismuth or the like, and therefore has excellent rubber-metal adhesiveness even without containing a cobalt-containing material. Moreover, as a result of the rubber composition not containing a cobalt-containing material, metal corrosion after treat-leaving can be suppressed and the environmental burden can be reduced.

Specifically, the content of cobalt atoms in the rubber composition according to the present disclosure is preferably 1 mass% or less, more preferably 0.5 mass% or less, further preferably 0.01 mass% or less, and even more preferably 0 mass%.

The content of the cobalt element in the rubber component is preferably 1 mass% or less, more preferably 0.5 mass% or less, further preferably 0.01 mass% or less, and even more preferably 0 mass%.

### [Filler]

The rubber composition according to the present disclosure preferably contains a filler.

As a result of the rubber composition containing a filler, the reinforcing property of the vulcanized rubber obtained from the rubber composition according to the present disclosure can be improved, and the durability of the rubber-metal composite and tire can be improved.

The type of filler is not limited, and a reinforcing filler that reinforces the rubber composition is used, for example. Examples of the reinforcing filler include metal oxides such as silica, alumina, titania, and zirconia, aluminum hydroxide, and carbon black.

Only one filler may be used, or two or more fillers may be used.

The filler preferably contains at least one selected from the group consisting of carbon black and silica, from the viewpoint of further improving the reinforcing property of the vulcanized rubber and the durability of the rubber-metal composite and tire.

### (Carbon black)

Carbon black is not limited, and may be appropriately selected depending on the purpose. For example, FEF, SRF, HAF, ISAF, and SAF grade carbon blacks are preferable, HAF, ISAF, SAF grade carbon blacks are more preferable, and HAF grade carbon black is further preferable.

The content of carbon black in the rubber composition is preferably 30 parts by mass or more, more preferably 40 parts by mass or more, and further preferably 50 parts by mass or more, and preferably 90 parts by mass or less, more preferably 80 parts by mass or less, and further preferably 70 parts by mass or less per 100 parts by mass of the rubber component.

As a result of the content of the filler in the rubber composition being 30 parts by mass or more per 100 parts by mass of the rubber component, the vulcanized rubber has excellent reinforcing property. As a result of the content of the filler in the rubber composition being 90 parts by mass or less per 100 parts by mass of the rubber component, hysteresis due to friction between fillers can be further reduced.

### (Silica)

Examples of silica include wet silica (hydrous silicate), dry silica (anhydrous silicate), colloidal silica, calcium silicate, and aluminum silicate. Of these, wet silica is preferably used. These silicas may be used alone or in combination of two or more. The content of silica is preferably 1.0 part to 10 parts by mass, more preferably 2.0 parts to 9.0 parts by mass, and further preferably 4.0 parts to 8.0 parts by mass per 100 parts by mass of the rubber component.

### [Sulfur]

The rubber composition according to the present disclosure preferably contains sulfur.

Sulfur is not limited, and examples thereof include powdered sulfur, precipitated sulfur, colloidal sulfur, surface-treated sulfur, and insoluble sulfur.

The content of sulfur in the rubber composition is preferably 2 parts to 10 parts by mass, more preferably 3 parts to 9 parts by mass, and further preferably 4 parts to 8 parts by mass per 100 parts by mass of the rubber component, from the viewpoint of further improving the rubber-metal adhesiveness and further improving the durability of the rubber-metal composite and tire.

### [Vulcanization accelerator]

The rubber composition according to the present disclosure may contain a vulcanization accelerator in order to further accelerate the vulcanization of the rubber component.

Specific examples thereof include thiuram-based, guanidine-based, aldehyde-amine-based, aldehyde-ammonia-based, thiazole-based, sulfenamide-based, thiourea-based, dithiocarbamate-based, and xanthate-based vulcanization accelerators. Of these, sulfenamide-based vulcanization accelerators are preferable. Examples of the sulfenamide-based vulcanization accelerators include N-cyclohexyl-2-benzothiazolylsulfenamide and N,N-dicyclohexyl-1,3-benzothiazol-2-sulfenamide. N-cyclohexyl-2-benzothiazolylsulfenamide is particularly preferable.

Only one vulcanization accelerator may be used, or two or more vulcanization accelerators may be used.

The content of the vulcanization accelerator in the rubber composition is preferably 0.1 parts to 5 parts by mass, more preferably 0.3 parts to 4 parts by mass, and further preferably 0.5 parts to 3 parts by mass per 100 parts by mass of the rubber component, from the viewpoint of further improving the rubber-metal adhesiveness and further improving the durability of the rubber-metal composite and tire.

The blending ratio between the vulcanization accelerator and sulfur (vulcanization accelerator/sulfur) is not limited, but is preferably 0.05 to 1, more preferably 0.1 to 0.9, and further preferably 0.11 to 0.5.

In addition to the rubber component, rubber-metal adhesion promoter, 4,4'-diphenylmethanebismaleimide, filler, and sulfur, the rubber composition according to the present disclosure may optionally contain not only hexamethylenebisthiosulfate disodium dihydrate and 1,3-bis(citraconimidomethyl)benzene but also compounding agents typically used in the rubber industry, such as a softener, stearic acid, antioxidant, zinc oxide, silane coupling agent, resin, wax, and oil, in a range that does not impede the object of the present disclosure as appropriate.

### (Antioxidant)

Of the foregoing compounding agents, the antioxidant is not limited, and examples thereof include amine-based, quinoline-based, quinone-based, phenol-based, and imidazole-based compounds, and metal carbamates.

Examples of amine-based antioxidants include phenylenediamine-based antioxidants having a phenylenediamine skeleton (-NH-Ph-NH-).

Specific examples thereof include N-(1,3-dimethylbutyl)-N'-phenyl-p-phenylenediamine (also referred to as "6PPD"), N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-dicyclohexyl-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine.

Of these, phenylenediamine-based antioxidants that do not have a double bond other than the phenylenediamine moiety (-NH-Ph-NH-) are preferable. Specifically, an amine-based antioxidant represented by the following formula (3) (R¹-NH-Ph-NH-R²) is preferable.

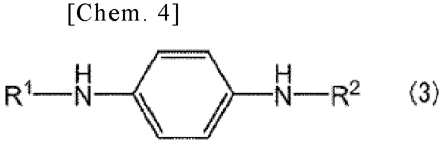

In the formula (3), R¹ and R² are each independently a monovalent saturated hydrocarbon group.

R¹ and R² may be the same or different, but are preferably the same from the viewpoint of synthesis.

The carbon number of the monovalent saturated hydrocarbon group is preferably 1 to 20, more preferably 3 to 10, and particularly preferably 6 to 7. If the carbon number of the saturated hydrocarbon group is 20 or less, the number of moles per unit mass is large, so that the anti-aging effect increases and the ozone resistance of the vulcanized rubber of the rubber composition improves.

It is preferable that R¹ and R² in the formula (3) are each independently a chain monovalent saturated hydrocarbon group having a carbon number of 1 to 20 or a cyclic monovalent saturated hydrocarbon group having a carbon number of 5 to 20, from the viewpoint of further improving the ozone resistance of the vulcanized rubber of the rubber composition.

Examples of the monovalent saturated hydrocarbon group include an alkyl group and a cycloalkyl group. The alkyl group may be straight-chain or branched-chain. The cycloalkyl group may be bonded with an alkyl group or the like as a substituent.

Examples of the alkyl group include methyl group, ethyl group, n-propyl group, isopropyl group, n-butyl group, isobutyl group, sec-butyl group, tert-butyl group, 1,2-dimethylbutyl group, 1,3-dimethylbutyl group, 2,3-dimethylbutyl group, n-pentyl group, isopentyl group, neopentyl group, 1-methylpentyl group, 2-methylpentyl group, 3-methylpentyl group, 4-methylpentyl group, 1,2-dimethylpentyl group, 1,3-dimethylpentyl group, 1,4-dimethylpentyl group, 2,3-dimethylpentyl group, 2,4-dimethylpentyl group, 3,4-dimethylpentyl group, n-hexyl group, 1-methylhexyl group, 2-methylhexyl group, various octyl groups, various decyl groups, and various dodecyl groups. Of these, 1,4-dimethylpentyl group is preferable.

Examples of the cycloalkyl group include cyclopentyl group, methylcyclopentyl group, cyclohexyl group, methylcyclohexyl group, cycloheptyl group, and cyclooctyl group. Of these, cyclohexyl group is preferable.

The amine-based antioxidant represented by the formula (3) may be supported on any carrier. For example, the amine-based antioxidant represented by the formula (3) may be supported on an inorganic filler such as silica or calcium carbonate.

The amine-based antioxidant represented by the formula (3) may form a masterbatch together with the rubber component. The rubber component used to form the masterbatch is not limited, and may be diene-based rubber such as natural rubber (NR), or ethylene-propylene-diene rubber (EPDM).

The amine-based antioxidant represented by the formula (3) may be a salt with an organic acid. The organic acid used to form the salt is not limited, and is, for example, stearic acid.

A quinoline-based antioxidant can also be suitably used. Examples of the quinoline-based antioxidant include a 2,2,4-trimethyl-1,2-dihydroquinoline polymer and 6-ethoxy-2,2,4-trimethyl-1,2-dihydroquinoline.

These antioxidants may be used alone or in combination of two or more.

In particular, the antioxidant preferably includes one or more selected from the group consisting of amine-based antioxidants and quinoline-based antioxidants, and more preferably includes at least an amine-based antioxidant.

### [Preparation of rubber composition]

The rubber composition according to the present disclosure can be produced by blending the components described above and kneading them using a kneader such as a Banbury mixer, a roll, or an internal mixer.

Here, the blending amount of each component is the same as the amount described above as the content in the rubber composition.

The kneading of the components may be performed in one step or divided into two or more steps. For example, in the case of kneading the components in two steps, the maximum temperature in the first step of kneading is preferably 130 °C to 160 °C, and the maximum temperature in the second step of kneading is preferably 90 °C to 120 °C.

The rubber composition according to the present disclosure is preferably used as a coating rubber composition for metal cords such as steel cords.

### <Rubber-metal composite>

A rubber-metal composite according to the present disclosure comprises: a vulcanized rubber of the rubber composition according to the present disclosure; and a metal.

Coating the metal with the rubber composition according to the present disclosure and vulcanizing the rubber composition yields a rubber-metal composite in which the metal is coated with the vulcanized rubber. At least one part of the metal is coated with the rubber composition according to the present disclosure. From the viewpoint of improving the durability of the rubber-metal composite, it is preferable that the entire surface of the metal is coated with the rubber composition according to the present disclosure.

The metal in the rubber-metal composite is not limited, and examples thereof include various metal members such as metal cords and metal plates.

The rubber-metal composite is suitably used as a reinforcing member for rubber articles that are particularly required to have strength, such as various automobile tires and hoses. The rubber-metal composite is especially suitable for use as a reinforcing member for belts, carcass plies, wire chafers, etc. of various automobile radial tires.

For example, the following method may be used to coat steel cords.

A predetermined number of steel cords that are preferably brass-plated are arranged in parallel at predetermined intervals. The steel cords are coated from above and below with an uncrosslinked rubber sheet of about 0.5 mm in thickness made of the rubber composition according to the present disclosure, and the rubber sheet is vulcanized at a temperature of, for example, about 160 °C for about 20 minutes. The resultant composite of the rubber composition and the steel cords thus has excellent rubber-metal adhesiveness.

The steel cords may be any of monofilaments and multifilaments made of steel (twist cords or aligned bundle cords), and their shape is not limited. The twist structure in the case where the steel cords are twist cords is not limited, and examples thereof include single-twist, multi-twist, multilayer-twist, and composite twist of multi-twist and multilayer-twist.

The steel cords are preferably subjected to a surface treatment such as plating or adhesive treatment, from the viewpoint of ensuring good adhesiveness to the rubber composition.

The surface of the steel filament may be plated. The type of plating is not limited, and examples thereof include zinc (Zn) plating, copper (Cu) plating, tin (Sn) plating, brass (copper-zinc (Cu-Zn)) plating, bronze (copper-tin (Cu-Sn)) plating, and ternary plating such as copper-zinc-tin (Cu-Zn-Sn) plating, copper-zinc-cobalt (Cu-Zn-Co) plating, and copper-zinc-iron (Cu-Zn-Fe) plating. Of these, brass plating, copper-zinc-cobalt ternary plating, and copper-zinc-iron ternary plating are preferable, and copper-zinc-iron ternary plating is more preferable.

For example, a steel filament whose surface has an N atom content of 2 at% or more and 60 at% or less and a Cu/Zn ratio of 1 or more and 4 or less may be used. In metal filament 1, for example, the amount of phosphorus contained as an oxide up to 5 nm of the filament outermost layer inward in the filament radial direction is 7.0 at% or less with respect to the total amount excluding the amount of C.

In the case of performing adhesive treatment, for example, adhesive treatment using trade name "Chemlok^{®}" produced by LORD Corporation (Chemlok is a registered trademark in Japan, other countries, or both) is preferable.

A steel cord including one or more steel filaments described above is preferably a steel cord wherein each of the filaments includes a steel filament substrate and a coating partially or wholly covering the steel filament substrate, the coating contains brass consisting of copper and zinc and is reinforced with iron, the iron is present in the brass as particles, and the particles have a size of 10 nm to 10000 nm. More preferably, the particles have a size of 20 nm to 5000 nm. The expression "reinforced with iron" means that the iron is not derived from the filament steel substrate.

The brass consists of copper and zinc. The brass preferably contains at least 63 mass% of copper, with the balance being zinc. The brass more preferably contains 65 mass% or more of copper, and further preferably contains 67 mass% or more of copper.

The amount of iron in the coating is preferably 1 mass% or more and less than 10 mass% with respect to the total mass of brass and iron. The amount of iron in the coating is more preferably 3 mass% or more and less than 9 mass% with respect to the total mass of brass and iron.

Further preferably, the coating is substantially free of zinc-iron alloys.

In the steel cord including one or more steel filaments described above, the amount of phosphorous present on the surface of the filament is denoted by Pₛ, and the amount of iron present on the surface of the filament is denoted by Feₛ. Then, the amount of (Pₛ + Feₛ) is determined by mildly etching the surface of the filament with a weak acid dissolving phosphorous and iron according to the following method (a) to (e):
(a) Weigh about 5 grams of steel cord, cut into pieces of about 5 cm, and introduce them into a test tube.
(b) Add 10 ml of 0.01 molar hydrochloric acid HCl.
(c) Shake the sample with an acid solution for 15 seconds.
(d) Measure the amount present in the solution by ICP-OES.

Herein, ICP-OES refers to inductively coupled plasma-optical emission spectroscopy (ICP-OES) using standard solutions of (Cu;Fe;Zn) of (0;0;0), (2;0.02;1), (5;0.1;2), (10;0.5;5) mg/L all in a matrix of 10 ml stripping solution.

(e) Express the mass of (Pₛ + Feₛ) per unit of surface area of the filament steel in milligram per square meter (mg/m²). The result is also referred to as (Feₛ + Pₛ).

The amount of phosphorous present on the surface of the filament is preferably 4 mg/m² or less and more than 0 mg/m², from the viewpoint of enhancing the adhesiveness. That is, 0 < Pₛ ≤ 4 mg/m². The amount of phosphorous (Pₛ) is more preferably less than 4 mg/m² (Pₛ < 4 mg/m²).

A larger amount of phosphorous (Pₛ) slows down the growth of the adhesion layer. The amount of phosphorous (Pₛ) may be less than 3 mg/m², and may be less than 1.5 mg/m².

The amount of iron present on the surface of the filament is preferably 30 mg/m² or more, more preferably more than 35 mg/m², and further preferably more than 40 mg/m².

The mass ratio (Feₛ/Pₛ) of the amount of iron present on the surface of the filament to the amount of phosphorus present on the surface of the filament is preferably more than 27.

Preferably, the surface coating weight SCW of the filament is the sum of the mass of brass and iron present in the coating per unit of surface area, the coating weight is expressed in grams per square meter, and the mass ratio [Feₛ/(SCW × Pₛ)] is more than 13.

As a method of obtaining a steel filament in which iron is present as particles in brass, an intermediate wire having a brass coating reinforced with iron particles may be drawn to a final diameter of 0.28 mm by wet wire drawing the wire through subsequently smaller dies in a lubricant to thus obtain a steel filament.

The lubricant contains a high pressure additive that typically includes phosphorous in an organic compound.

The dies used may be Set-D dies in which at least the head die is a sintered diamond die and the remaining dies are tungsten carbide dies.

Since the rubber composition according to the present disclosure can suppress metal corrosion even after a certain period of time has passed since the metal is coated, for example, it is possible to distribute the product in a state in which the metal cords are coated with the rubber composition and, at the distribution destination, vulcanize the rubber composition to produce a rubber-metal composite. The resultant rubber-metal composite is prevented from metal corrosion, and therefore has excellent durability without loss of rubber-metal adhesiveness.

### <Tire>

A tire according to the present disclosure comprises the rubber-metal composite according to the present disclosure.

The tire according to the present disclosure has excellent durability as a result of comprising the rubber-metal composite according to the present disclosure.

A method of producing the tire according to the present disclosure is not limited as long as the tire can be produced so as to include the rubber-metal composite according to the present disclosure.

Typically, a rubber composition containing various components is processed into various members in an unvulcanized stage, and the members are attached and molded on a tire molding machine by a usual method to form a raw tire. The raw tire is heated and pressurized in a vulcanizer to produce a tire. For example, after kneading the rubber composition according to the present disclosure, steel cords are coated with the obtained rubber composition and an unvulcanized belt layer, an unvulcanized carcass, and other unvulcanized members are laminated, and the unvulcanized laminate is vulcanized to obtain a tire.

As the gas with which the tire is filled, ordinary air, air with an adjusted partial pressure of oxygen, or an inert gas such as nitrogen, argon, or helium may be used.

### <Hose and crawler>

A hose according to the present disclosure comprises the rubber-metal composite according to the present disclosure.

A crawler according to the present disclosure comprises the rubber-metal composite according to the present disclosure.

The hose and crawler according to the present disclosure have excellent durability as a result of including the rubber-metal composite according to the present disclosure excellent in durability and rubber-metal adhesiveness. A method of producing each of the hose and crawler according to the present disclosure is not limited.

### EXAMPLES

### <Example 1>

### [Preparation of rubber composition]

The components are kneaded according to the formulation shown in Table 2 to prepare a rubber composition.

### <Examples 2 to 5, Comparative Example 1>

### [Preparation of rubber composition]

The components were kneaded according to the formulation shown in Table 2 to prepare a rubber composition. The details of the components shown in Table 2 are as follows.

### Natural rubber: RSS#3.

Carbon black: LS-HAF grade carbon black.

Vulcanization accelerator CBS: N-cyclohexyl-2-benzothiazolylsulfenamide, trade name "NOCCELER CZ" produced by Ouchi Shinko Chemical Industrial Co., Ltd.

4,4'-diphenylmethanebismaleimide: produced by Otsuka Chemical Co., Ltd.

Antioxidant: N-phenyl-N'-(1,3-dimethylbutyl)-p-phenylenediamine, "NOCRAC 6C" produced by Ouchi Shinko Chemical Industrial Co., Ltd.

Neodecanoic acid Co: neodecanoic acid cobalt, the following structure (i), molecular weight 401.5.

Neodecanoic acid Bi: neodecanoic acid bismuth, the following structure (iii), molecular weight 722.8, carboxylic acid metal salt (1) whose metal species is bismuth.

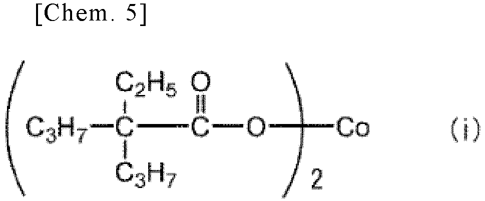

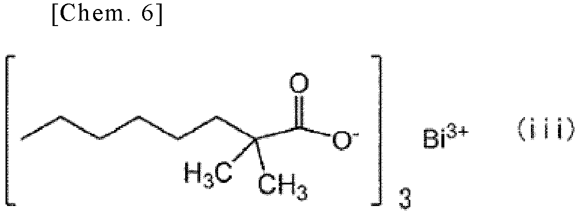

### <Method of producing rubber-metal composite>

### [Example 1]

Steel cords (1 × 5 × 0.25 mm (filament diameter)) having the plating composition and surface phosphorus content shown in Table 2 are arranged in parallel at intervals of 12.5 mm and coated with the prepared rubber composition to produce an unvulcanized rubber-metal composite precursor (unvulcanized steel cord topping product) of 5 mm in thickness. The rubber-metal composite precursor is then immediately vulcanized at 145 °C for 40 minutes to produce a rubber-metal composite containing vulcanized rubber (normal composite).

A rubber-metal composite precursor (unvulcanized steel cord topping product) of 5 mm in thickness is produced. The rubber-metal composite precursor (unvulcanized steel cord topping product) is then left in an environment of 40 °C in temperature and 80 % in humidity for one week. The rubber-metal composite precursor after the leaving is vulcanized at 145 °C for 40 minutes to produce a rubber-metal composite containing vulcanized rubber (composite for treat-leaving evaluation)

For the evaluation of the below-described rubber deterioration resistance index, a rubber sample after the evaluation of rubber-metal adhesiveness in adhesion after treat-leaving is used.

### [Examples 2 to 5, Comparative Example 1]

Steel cords (1 × 5 × 0.25 mm (filament diameter)) having the plating composition and surface phosphorus content shown in Table 2 were arranged in parallel at intervals of 12.5 mm and coated with the prepared rubber composition to produce an unvulcanized rubber-metal composite precursor (unvulcanized steel cord topping product) of 5 mm in thickness. The rubber-metal composite precursor was then immediately vulcanized at 145 °C for 40 minutes to produce a rubber-metal composite containing vulcanized rubber (normal composite).

A rubber-metal composite precursor (unvulcanized steel cord topping product) of 5 mm in thickness was produced. The rubber-metal composite precursor (unvulcanized steel cord topping product) was then left in an environment of 40 °C in temperature and 80 % in humidity for one week. The rubber-metal composite precursor after the leaving was vulcanized at 145 °C for 40 minutes to produce a rubber-metal composite containing vulcanized rubber (composite for treat-leaving evaluation)

For the evaluation of the below-described rubber deterioration resistance index, a rubber sample after the evaluation of rubber-metal adhesiveness in adhesion after treat-leaving was used.

### [Evaluation]

### (Example 1)

Evaluation is performed by the methods shown in Table 1.

### (Examples 2 to 5, Comparative Example 1)

Evaluation was performed by the methods shown in Table 1.

**[Table 1]**

| Evaluation item | | Sample condition | Measurement condition |
|---|---|---|---|
| Rubber-metal adhesiveness | Thermal deterioration adhesion index (higher is better) | Composite of 5mm in thickness produced by attaching steel cord topping product and rubber and performing vulcanization at 145 °C for 40 min was put under nitrogen partial pressure of 0.1 MPa at 100 °C for 60 days (where atmospheric pressure: 0.1 MPa). | Three cords were pulled out in atmosphere of -65±5 °C and adhesiveness was measured. |
| | Treat-preparation condition, treat-leaving condition, and cord pullout condition in evaluation of thermal deterioration adhesion index | Steel cord topping product was left at 40 °C and 80% RH for 7 days, and then rubber was attached to produce composite of 5mm in thickness and vulcanization was performed at 145 ° C for 40 min. | Three cords were pulled out in atmosphere of -65±5 °C and adhesiveness was measured. |
| Durability | Rubber deterioration resistance index (higher is better) | Product of vulcanization at 145 °C for 40 min after forming compounded rubber into sheet (2±0.3 mm thickness, 15 cm x 15 cm) was aged under oxygen partial pressure of 0.5 MPa at 70 °C for 3 days (where atmospheric pressure: 0.1 MPa) and then punched into JIS#3 shape. | Elongation at break x strength at break in (500 mm/min) 100 °C tensile test by Toyo Seiki Strograph AP3. |
| | 5% tand index (lower is better (= lower heat generation)) | Strip sample was punched from product of vulcanization at 145 °C for 40 min after forming compounded rubber into sheet (2±0.3 mm thickness, 15 cm × 15 cm). | E" (loss modulus)/E' (storage modulus) at 10 Hz vibration with one-side tensile strain 5% (total 10%) in 100 °C atmosphere by Toyo Seiki Spectrometer. |

The evaluation methods used in Examples 1 to 5 and Comparative Example 1 will be described below.

In detail, the evaluation methods are as follows:

### (Rubber-metal thermal deterioration adhesion index)

### [Example 1]

The rubber-metal thermal deterioration adhesiveness is evaluated based on the adhesion state of thermal aging adhesion.

In the evaluation of the thermal deterioration adhesiveness, the rubber-metal composite (normal composite) of 5 mm in thickness produced by attaching the steel cord topping product and the rubber is subjected to aging in an environment of a nitrogen partial pressure of 0.1 MPa (where the atmospheric pressure is 0.1 MPa) at 100 °C for 60 days, and then steel cords are pulled out from the rubber-metal composite in an atmosphere of -65 ± 5 °C.

The result of each of Examples and Comparative Example is shown by an index, where the result of Comparative Example 1 is 100.

### [Examples 2 to 5, Comparative Example 1]

The rubber-metal thermal deterioration adhesiveness was evaluated based on the adhesion state of thermal aging adhesion.

In the evaluation of the thermal deterioration adhesiveness, the rubber-metal composite (normal composite) of 5 mm in thickness produced by attaching the steel cord topping product and the rubber was subjected to aging in an environment of a nitrogen partial pressure of 0.1 MPa (where the atmospheric pressure is 0.1 MPa) at 100 °C for 60 days, and then steel cords were pulled out from the rubber-metal composite in an atmosphere of -65 ± 5 °C.

The result of each of Examples and Comparative Example is shown by an index, where the result of Comparative Example 1 is 100.

### (Rubber deterioration resistance index)

### [Example 1]

The rubber composition is brought into contact with the metal and treat-left under the condition shown in Table 1. For the rubber-metal adhesiveness, steel cords are pulled out from the rubber-metal composite in an atmosphere of -65 ± 5 °C, and the vulcanized rubber is cut out from the rubber-metal composite used in the adhesion evaluation. The elongation at break (EB) (unit: %) and the strength at break: tensile strength (TB) (unit: MPa) of the obtained vulcanized rubber are measured. The value (EB × TB) obtained by multiplying EB and TB is used as an index for each of Examples and Comparative Example where EB × TB of Comparative Example 1 is 100. A higher index of EB × TB indicates better durability of the rubber-metal composite.

The elongation at break (EB) (unit: %) and the tensile strength (TB) (unit: MPa) are measured by the method shown in Table 1.

### [Examples 2 to 5, Comparative Example 1]

The rubber composition was brought into contact with the metal and treat-left under the condition shown in Table 1. For the rubber-metal adhesiveness, steel cords were pulled out from the rubber-metal composite in an atmosphere of -65 ± 5 °C, and the vulcanized rubber was cut out from the rubber-metal composite used in the adhesion evaluation. The elongation at break (EB) (unit: %) and the strength at break: tensile strength (TB) (unit: MPa) of the obtained vulcanized rubber were measured. The value (EB × TB) obtained by multiplying EB and TB is used as an index for each of Examples and Comparative Example where EB × TB of Comparative Example 1 is 100. A higher index of EB × TB indicates better durability of the rubber-metal composite.

The elongation at break (EB) (unit: %) and the tensile strength (TB) (unit: MPa) were measured by the method shown in Table 1.

### (tanδ)

### [Example 1]

A strip of vulcanized rubber is cut out from the rubber-metal composite (normal composite) used for initial adhesion evaluation in the evaluation of rubber-metal adhesiveness. tanδ of the strip of vulcanized rubber is measured using a spectrometer viscoelasticity meter produced by Toyo Seiki Co., Ltd. The measurement is performed by applying a sine wave with a one-side tensile strain of 5 % and a frequency of 15 Hz at a temperature of 100 °C.

tanδ of each of Examples and Comparative Example is used as an index where tanδ of Comparative Example 1 is 100. A higher index indicates better durability of the rubber-metal composite.

### [Examples 2 to 5, Comparative Example 1]

A strip of vulcanized rubber was cut out from the rubber-metal composite (normal composite) used for initial adhesion evaluation in the evaluation of rubber-metal adhesiveness. tanδ of the strip of vulcanized rubber was measured using a spectrometer viscoelasticity meter produced by Toyo Seiki Co., Ltd. The measurement was performed by applying a sine wave with a one-side tensile strain of 5 % and a frequency of 15 Hz at a temperature of 100 °C.

tanδ of each of Examples and Comparative Example is used as an index where tanδ of Comparative Example 1 is 100. A higher index indicates better durability of the rubber-metal composite.

### The results are shown in Table 2.

**[Table 2]**

| Parts by mass | | | Ex. 1 | Ex. 2 | Ex. 3 | Ex. 4 | Ex. 5 | Comp. Ex. 1 |
|---|---|---|---|---|---|---|---|---|
| Rubber formulation | Natural rubber | parts | 100 | 100 | 100 | 100 | 100 | 100 |
| | Carbon black | parts | 60 | 60 | 60 | 60 | 60 | 60 |
| | Zinc oxide | parts | 10 | 10 | 10 | 10 | 10 | 10 |
| | Neodecanoic acid Co | parts | 0 | 0 | 0 | 0 | 0 | 1.4 |
| | Neodecanoic acid Bi | parts | 0.02 | 0.68 | 1.36 | 0.68 | 0.68 | 0 |
| | Antioxidant | parts | 1 | 1 | 1 | 1 | 1 | 1 |
| | Sulfur | parts | 6 | 6 | 6 | 6 | 6 | 6 |
| | 4,4'-diphenytmethanebi smaleimide | parts | 1 | 1 | 1 | 1 | 1 | 0 |
| | Vulcanization accelerator CBS | parts | 0.9 | 0.9 | 0.9 | 0.9 | 0.9 | 0.9 |
| SC | Plating composition (Cu/Zn/Co) % | | 63/37/- | 63/37/- | 63/37/- | 63/37/- | 67/29/Co:4 | 63/37/- |
| | Surface phosphorus content (mg/m²) | | 4 | 4 | 4 | 2 | 2 | 4 |
| | Thermal deterioration adhesion index (higher is better) | | 120 | 110 | 107 | 100 | 97 | 100 |
| | Rubber deterioration resistance index (higher is better) | | 130 | 127 | 125 | 127 | 127 | 100 |
| | 5 % tand index (lower is better (= lower heat generation)) | | 78 | 80 | 82 | 80 | 80 | 100 |

In the plating composition in Table 2, "63/37/-" denotes that the plating composition is "Cu/Zn" = "63/37".

### INDUSTRIAL APPLICABILITY

The rubber composition according to the present disclosure enables production of a rubber-metal composite having excellent rubber-metal thermal deterioration adhesiveness and excellent durability. A rubber-metal composite obtained using the rubber composition according to the present disclosure is therefore suitable for producing various tires including passenger vehicle tires and heavy-duty tires such as truck tires and bus tires, as well as hoses, crawlers, etc.

## Claims

1. A rubber composition comprising:
a rubber component;
0.01 parts by mass or more of a rubber-metal adhesion promoter per 100 parts by mass of the rubber component, the rubber-metal adhesion promoter containing at least one selected from the group consisting of a carboxylic acid metal salt (1) having a carbon number of 2 to 25 and a metal species selected from the group consisting of bismuth, copper, antimony, silver, niobium, and zirconium and a compound (2) represented by the following formula (A); and
4,4'-diphenylmethanebismaleimide, 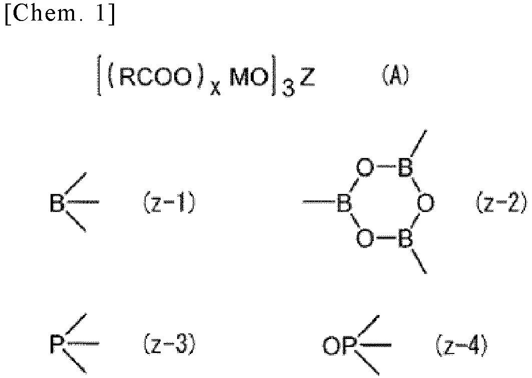
wherein in the formula (A), Z is a structure selected from the formulas (z-1) to (z-4), M is bismuth, copper, antimony, silver, niobium, or zirconium, (RCOO) is a residue of an aliphatic carboxylic acid having a carbon number of 2 to 25, and x is an integer of (valence of M - 1).

2. The rubber composition according to claim 1, further comprising at least one selected from the group consisting of hexamethylenebisthiosulfate disodium dihydrate, 1,3-bis(citraconimidomethyl)benzene, and 3-hydroxy-N'-(1,3-dimethylbutylidene)-2-naphthoic acid hydrazide.

3. The rubber composition according to claim 1 or 2, comprising a filler containing at least one selected from the group consisting of carbon black and silica.

4. The rubber composition according to any one of claims 1 to 3, wherein the rubber component contains natural rubber.

5. The rubber composition according to any one of claims 1 to 4, wherein the rubber-metal adhesion promoter contains the carboxylic acid metal salt (1), and the metal species of the carboxylic acid metal salt (1) is bismuth or copper.

6. The rubber composition according to any one of claims 1 to 5, wherein the rubber-metal adhesion promoter contains the carboxylic acid metal salt (1), and an aliphatic carboxylic acid in the carboxylic acid metal salt (1) is an aliphatic monocarboxylic acid or an aliphatic dicarboxylic acid.

7. The rubber composition according to claim 6, wherein the aliphatic monocarboxylic acid is a saturated aliphatic monocarboxylic acid having a carbon number of 2 to 20.

8. The rubber composition according to claim 7, wherein the saturated aliphatic monocarboxylic acid having a carbon number of 2 to 20 is 2-ethylhexanoic acid, neodecanoic acid, hexadecanoic acid, or octadecanoic acid.

9. The rubber composition according to any one of claims 1 to 8, wherein the rubber-metal adhesion promoter contains the compound (2), and M in the compound (2) is bismuth or copper.

10. The rubber composition according to any one of claims 1 to 9, wherein the rubber-metal adhesion promoter contains the compound (2), and Z in the compound (2) is a structure represented by the formula (z-1).

11. The rubber composition according to any one of claims 1 to 10, wherein the rubber-metal adhesion promoter contains the compound (2), and (RCOO) in the compound (2) is a residue of a saturated aliphatic monocarboxylic acid having a carbon number of 2 to 20.

12. The rubber composition according to claim 11, wherein (RCOO) in the compound (2) is a residue of 2-ethylhexanoic acid, a residue of neodecanoic acid, a residue of hexadecanoic acid, or a residue of octadecanoic acid.

13. A rubber-metal composite comprising:
a vulcanized rubber of the rubber composition according to any one of claims 1 to 12; and
a metal.

14. A tire comprising the rubber-metal composite according to claim 13.

15. A hose comprising the rubber-metal composite according to claim 13.

16. A crawler comprising the rubber-metal composite according to claim 13.
